# EUROPEAN PATENT APPLICATION

(11) **EP 2 237 477 A1**
(43) Date of publication of application: **06.10.2010**
(21) Application number: 09156799.0
(22) Date of filing: 31.03.2009
(51) Int. Cl.: H04L 12/18, H04L 29/08

(54) **Data transfer to multiple operating stations**

(71) Applicant: Siemens Aktiengesellschaft, 80333 München (DE)
(72) Inventor: Singh, Reetesh, 560076 Bangalore (IN)

(57) **Abstract**

A method and system for transferring a data set (11) from a configuration system (10) concurrently to a plurality of operating stations (15) is disclosed. The method comprising of storing the data set to be transferred as a plurality of data segments (12), maintaining a record of the data segments (13) sent to each of the plurality of operating stations, checking if any of the data segments have not been received by at least one of the plurality of operating stations based on metainformation in the record, identifying if any other operating station has received the missing data segment, transferring the missing data segment to one of the operating station if any other operating stations has received the missing data segment and transferring the missing data from the configuration system to one of the operating stations if no other operating station has received the missing data segment.

## Description

The present invention relates to a method and system for transferring data to multiple operating stations.

Networking is leading to increased demand for distributed computing, for instance, a service to access files stored on or available to a server. Although the transparent access to remote file may be desirable in some applications, it is often difficult to implement especially in a network or between networks composed of heterogeneous computers. Furthermore, networks are often congested or overloaded with request caused by the unavailability of remote files, potentially consuming a relatively more time for downloading.

Currently, the data download functionality available with the systems does not support simplify the process in the server while downloading the data to multiple user stations. Typically, techniques are deployed such as replicating the number of servers and/or reducing the number of end user download devices to counterfeit this problem. However, both of these solutions tend to adversely affect effectiveness of the system by increasing network transmission requirements and thus cost or increasing access latency.

The object of the invention is to reduce workload on the server and to reduce the time involved in data transfer when downloading large items.

These problems are solved by a method according to claim 1 and system according to claim 12.

The above mentioned objective is achieved by a method of transferring a data set to a plurality of operating stations from a configuration system. The method comprising storing at the configuration system the data set to be transferred as a plurality of data segments, maintaining at the configuration system a record of the data segments send to each of the plurality of operating stations, checking based on metainformation contained in the record which, if any, of the data segments have not been received by each of the plurality of operating stations, identifying for each of the data segments not been received by one of the operating station based on the metainformation contained in the record which, if any, other the operating station has received missing the data segment, transferring the missing data segment from the identified operating station to one of the operating station requiring the data segment if any other operating stations has received the missing data segment, and transferring the missing data from the configuration system to one of the operating station requiring the data segment, if no other operating station has received the missing data segment. This helps to eliminate the requirement of commencing the data transferring process for all operating stations at the same time or of sending the same data segment to the same time to each operating stations. Thereby, reducing the work load on the configuration system and speeding the rate of data transfer as the data segments are being shared among different operating stations.

According to an embodiment, metainformation further including identification information on at least one of the configuration system co-coordinating transferring of each of the data segments to the plurality of operating stations. This enables the operating stations to distinguish the configuration system providing data segments to each of the operating stations, to obtain missing data segments in case if a data segment of the data set is missing.

According to an embodiment, the configuration system checks metainformation contained in the record to transfer the data segments to each of the plurality of operating stations. This enables to track the data segments available with each operating station.

According to an embodiment, the metainformation is checked at each of the plurality of operating stations for identifying each of the data segments transmitted from the configuration system to the plurality of operating stations. Thereby, enabling an operating station to connect to other operating stations for transferring data segments, which it has not received from the configuration system.

According to an embodiment, the configuration system updates the record of data segments on transferring the data segments to each of the plurality of operating stations. This helps in keeping track of the data segments at each of the operating station at each particular time.

According to an embodiment, the configuration system provides instructions to each of the plurality of operating stations requiring the missing data segment to transfer the missing data segment from the configuration system, if no other the operating station contains the data segment or to transfer the missing data segment from another the operating station already having the data segment from the configuration system. This supports a greater number of concurrent download to multiple operating stations in a comparatively short time and without a corresponding increase in hardware requirements. According to an embodiment, the configuration system replicate only a single copy of the data segments to at least one of the plurality of operating stations. This reduces the workload and time required for transferring the data set to multiple operating stations.

According to an embodiment, transferring the data segments of the data set from the configuration system to a plurality of the operating stations includes dividing the data set to be transferred into a plurality of data segments, wherein each of the plurality of segments corresponds to a portion of the data set, storing a copy of each of the plurality of data segments of the data set, maintaining for the plurality of operating stations a record including references to the plurality of data segments to be transmitted to each of the plurality of operating stations, sending a metainformation file based on the record indicating location of the data segments to the plurality of operating stations, selecting a first operating station of the plurality of operating station for transmitting a copy of one or more of the data segments that are referenced in the record for transmission to the first operating station and selecting a second operating station of the plurality of operating station for transmitting a copy of one or more of the data segments that are referenced in the record for transmission to the second operating station. This helps to transfer the data segments to multiple locations at same time and thereby reducing the hardware cost as no specialized hardware is required for the configuration system to support data transfer to multiple operating stations at the same time.

According to an embodiment, the configuration system provides instructions to the first operating station to transfer the missing data segments not referenced in the record from the configuration system, if no other the operating station contains the portion of the data set or to transfer the missing data segments not referenced in the record from the second operating station already having the portion of the data set from the configuration system. This supports a greater number of concurrent downloads to multiple operating stations without a corresponding increase in the hardware requirements and transfer time.

The objective is also achieved by a computer readable medium storing a plurality of instructions causing a computer to perform a method of transferring of a data set to a plurality of operating stations from a configuration system, the method comprising steps of storing at the configuration system the data set to be transferred as a plurality of data segments, maintaining at the configuration system a record of the data segments send to each of the plurality of operating stations, checking based on metainformation contained in the record which, if any, of the data segments have not been received by each of the plurality of operating stations, identifying for each of the data segments not been received by one of the operating station based on the metainformation contained in the record which, if any, other the operating station has received missing the data segment, if any other operating stations has received the missing data segment, transferring the missing data segment from the identified operating station to one of the operating station requiring the data segment and transferring the missing data segments from the configuration system to one of the operating station requiring the data segment, if no other operating station has received the missing data segment. This provides a balanced usage of all system resources to reduce the work load on the configuration system and to speed the rate of data transfer as to different operating stations.

The present invention is further described hereinafter with reference to illustrated embodiments shown in the accompanying drawings, in which:
FIG 1 illustrates a block diagram depicting a configuration system capable of facilitating transfer of a data set to multiple operating stations according to an embodiment herein;
FIG 2 illustrates a flow diagram illustrating a method of transferring a data set to multiple operating stations according to an embodiment herein; and
FIG 3 illustrates a flow diagram illustrating a method of transferring data segments by an operating station according to an embodiment herein.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

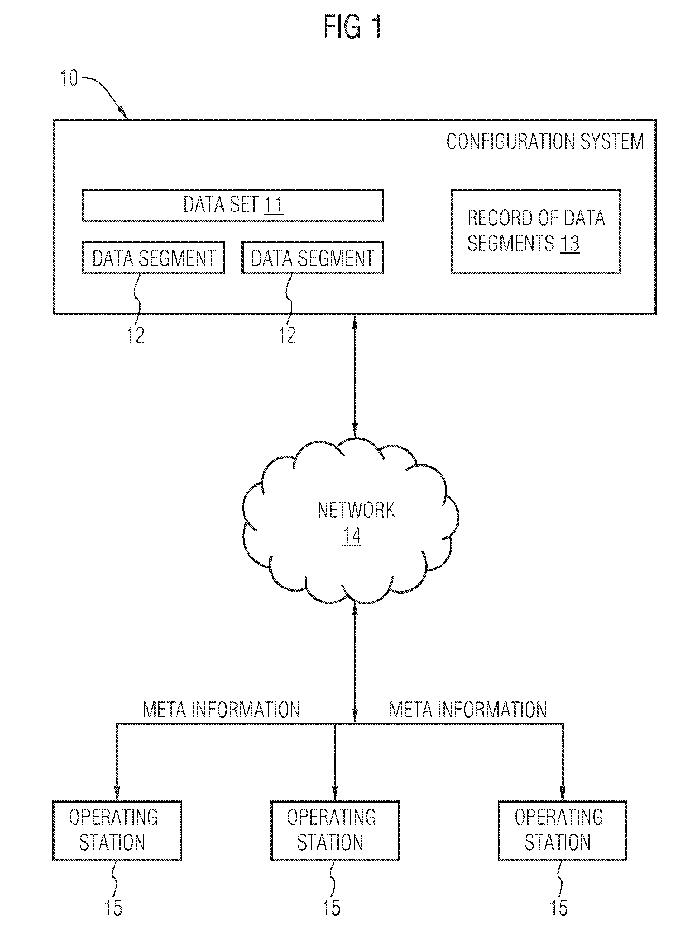

FIG 1 illustrates a block diagram depicting a configuration system 10 capable of facilitating transfer of a data set 11 to multiple operating stations 15 according to an embodiment herein. The configuration system 10 includes the data set 11 to be transferred to the multiple operating stations 15. The configuration system 10 divides the data set 11 to a set of data segments 12, where each data segment refers to a portion of the data set 11, for fast transfer of data to operating stations 15. The configuration system 10 further maintains a record of data segments 13 being transferred to various operating stations 15 for keeping track of the data segments 12 available with different operating stations 15 during the process of data transfer.

The configuration system 10 sends metainformation of the data segments 12 based on the record 13 to multiple operating stations 15 transferring data from the configuration system 10. The metainformation includes information of data segments 12 sent to various operating stations 15 and information on at least one of the configuration system 10 co-coordinating transferring of data segments 12 to the plurality of operating stations 15. The operating stations 15 analyzes the metainformation and connects to the configuration system 10 specified in the metainformation and obtains the data segment 12 specified for each of the operating station 15. The operating stations 15 also obtain a list of operating stations 15 currently transferring data segments 12 as defined in the metainformation from the configuration system 10. The operating stations 15 performs a check based on metainformation which, if any, of the data segments 13 have not been received by any of the operating stations 15. If all the data segments 12 have not been received, the operating station 15 contacts the configuration system 10 for the missing data segment 12. The configuration system 10 performs a check on the record of data segments 13 to identify if any other operating station 15 has received the missing data segment 12. If an operating station 15 is identified of having the missing data segment 12, then the configuration system 10 provides instructions to the operating station 15 requiring the data segment 12 to transfer the missing data segment 12 from the identified operating station 15. If no other operating station 15 is identified of having the missing data segment 12, the configuration system 10 then provides a copy of the data segment 12 of the data set 11 stored in the record 13.

In the example of FIG 1, the configuration system 10 replicates a single copy of the data segments 12 of the data set 11 to any of the operating stations 15. This reduces the time for data transfer to multiple operating stations 15, as the data segments 12 are shared among different operating stations 15.

Referring to FIG 1, representative hardware for data transfer includes at least one configuration system 10 connected for communication to multiple operating stations 15 via a network 14. The network 14 provides the processing necessary to transfer data segments 12 between the configuration system 10 and operating station 15 or between two or more operating stations 15.

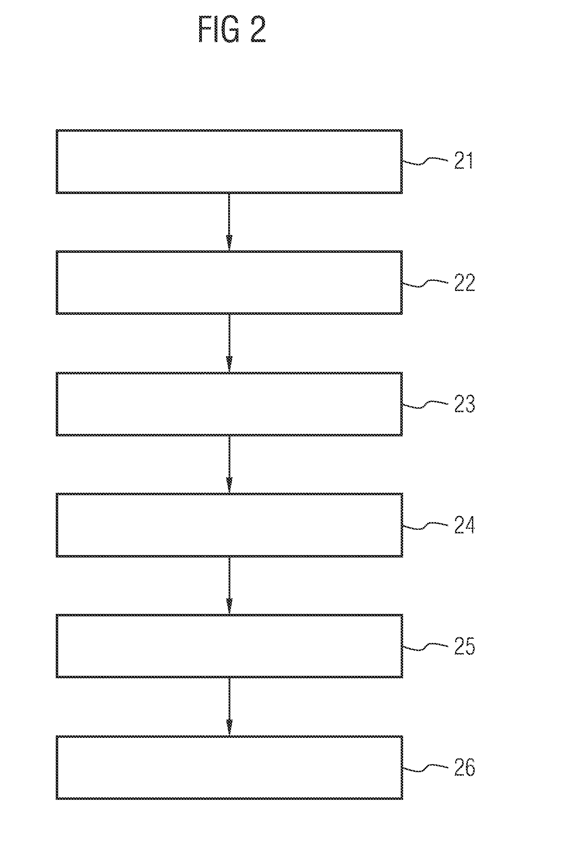

FIG 2 illustrates a flow diagram illustrating a method of transferring a data set 11 to multiple operating stations 15 according to an embodiment herein. At block 21, the configuration system 10 divides the data set 11 to be transferred to the operating stations 15 to a set of data segments 12. At block 22, the configuration system 10 creates and maintains a record of data segments 12 being sent to each of the plurality of operating stations 15. The configuration system 10, at block 23, sends the metainformation contained in the record 13 indicating location of the data segments 12 to the plurality of operating stations 15. The metainformation also includes information on the configuration system 10 co-coordinating transferring of each of the data segments 12 to the plurality of operating stations 15. The configuration system 10 checks the metainformation contained in the record 13 to transfer the data segments 12 to each of the plurality of operating stations 15. At block 24, the operating stations 15 analyses the metainformation for identifying each of the data segments 12 transmitted from the configuration system 10 to different operating station 15. At block 25, the operating station 15 connects to the operating stations 15 mentioned in the metainformation for transferring the missing data segments 12. At block 26, the operating stations 15 directly transfers the missing data segments directly from the copy of data segments 12 in the record 13, if no other operating station 15 has received the data segment 12 from the configuration system 10.

Preferably, the configuration system 10 provides instructions to each of the plurality of operating stations 15 to transfer the missing data segment 12 from the configuration system 10, if no other operating station 15 contains the data segment or to transfer the missing data segment 12 from another operating station 15 already having the data segment 12 from the configuration system 10.

The configuration system 10 replicates only a single copy of the data segments 12 to at least one of the plurality of operating stations 15. The plurality of operating stations 15 transferring data segments 12 from the configuration system 10 are connected to each other to transmit different data 12 segments not obtained from the configuration system 10.

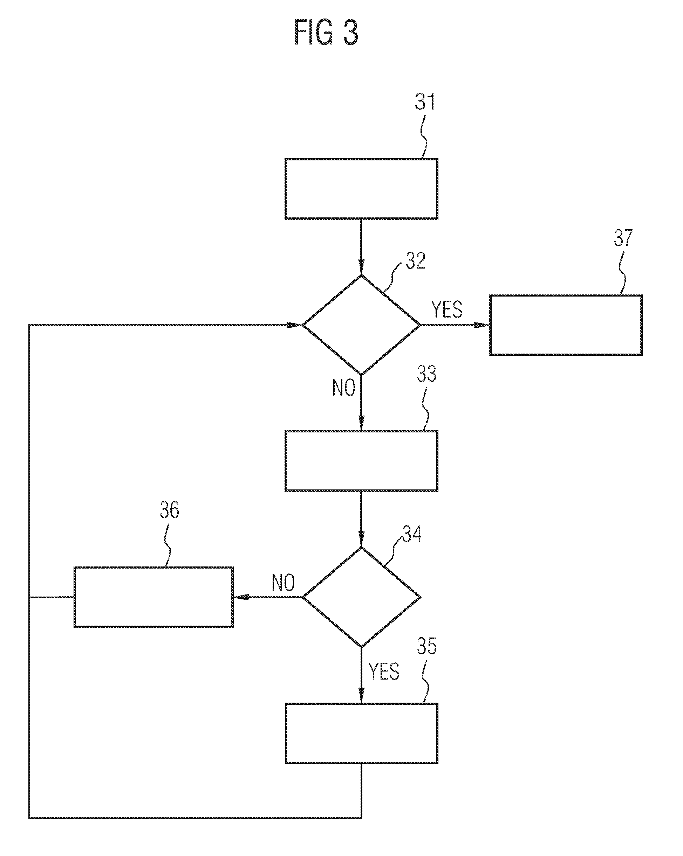

FIG 3 illustrates a flow diagram illustrating a method of transferring data segments 12 by an operating station 15 according to an embodiment herein. At block 31, the operating stations 15 receive metainformation of the data set 11 from the configuration system 10. The metainformation includes account of data segments 12 send to each of the plurality of operating stations 15 and information of the configuration system 10 co-coordinating transferring each of the data segments 12 to the operating stations 15. At block 32, the operating station 15 performs a check to find if the metainformation includes information of all the data segments 12 of the data set 11. If all the data segments 12 are not received by the operating station 15, the operating station 15 further sends a request to the configuration system 10 for the missing data segments 12, at block 33. If all the data segments 12 are received, then the process is terminated at block 37. At block 34, the configuration system 10 analyses the record 13 to detect if the required data segment 12 is available with any other operating station 15. At block 35, the configuration system 10 provides instructions to each of the plurality of operating stations 15 requiring the missing data segment 12 to transfer the missing data segment 12 from the configuration system 10, if no other said operating station 15 contains the missing data segment 12. The process then returns to block 32. If the missing data segment 12 is available with other operating station 15 in the network 14, then at block 36, the configuration system 10 provides instructions to obtain the missing data segment 12 from another operating station 15 already having the required data segment 12 from the configuration system 10. The process then returns to block 32.

In the embodiments disclosed herein, the transfer of data segments to multiple operating stations can be initiated by the configuration system voluntarily based on requirements. The configuration system may also initiate a data transfer on reception of a request for data transfer from at least one of the operating stations. If the configuration system receives multiple requests for transferring the same data, the configuration system may then group the multiple requests into a single request for transferring the data segments to all requesting operating stations. Also, the operating stations may send a request for selectively transferring the data segments, which are being missed.

In view of the foregoing, the method can be used for asynchronous download of data, where the data can be downloaded in parallel to multiple operating stations. This in turn, reduces the hardware cost, as no specialized hardware is required for the configuration system to support download to multiple target operating stations at the same time. In addition, there is no need to raise the transfer capability of the data paths by implementing different means having a larger transfer rate which requires a high cost, so that it is possible to increase the number of users who can access the continuous data simultaneously without causing an increase in cost.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skill in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method of transferring a data set (11) to a plurality of operating stations (15) from a configuration system (10), said method comprising steps of:
- storing at said configuration system (10) said data set (11) to be transferred as a plurality of data segments (12);
- maintaining at said configuration system (10) a record of said data segments (12) send to each of said plurality of operating stations (15);
- checking based on metainformation contained in said record (13) which, if any, of said data segment (12) have not been received by each of said plurality of operating stations (15);
- identifying for each of said data segment (12) not been received by one of said operating station (15) based on the metainformation contained in said record (13) which, if any, other said operating station (15) has received missing said data segment (12);
- if any other operating stations (15) has received said missing data segment (12), transferring said missing data segment (12) from said identified operating station (15) to one of said operating station (15)requiring said data segment (12); and
- transferring said missing data segment (12) from the configuration system (10) to one of said operating station (15)requiring said data segment (12), if no other operating station (15) has received said missing data segment (12).

2. The method according to claim 1, wherein said metainformation further including identification information on at least one of said configuration system (10) co-coordinating transferring of each of said data segment (12) to said plurality of operating stations (15).

3. The method according to claim 2, wherein said configuration system (10) checks said metainformation contained in said record (13) to transfer said data segment (12) to each of said plurality of operating stations (15).

4. The method according to claim 3, wherein said metainformation is checked at each of said plurality of operating stations (15) for identifying each of said data segment (12) transmitted from said configuration system (10)to said plurality of operating stations (15).

5. The method according to claim 3, wherein said configuration system (10) updates said record (13) of said data segment (12) on transferring said data segment (12) to each of said plurality of operating stations (15).

6. The method according to claim 3, wherein said configuration system (10) provides instructions to each of said plurality of operating stations (15) requiring said missing data segment (12) to transfer said missing data segment (12) from said configuration system (10), if no other said operating station (15) contains said data segment (12).

7. The method according to claim 3, wherein said configuration system (10) provides instructions to each of said plurality of operating station (15) requiring said missing data segment (12) to transfer said missing data segment (12) from another said operating station (15) already having said data segment (12) from said configuration system (10).

8. The method according to claim 1, wherein said configuration system (10) replicate only a single copy of said data segment (12) to at least one of said plurality of operating stations (15).

9. The method according to claim 3, wherein transferring said data segment (12) of said data set (11) from said configuration system (10) to said plurality of operating stations (15) includes:
- dividing said data set (11) to be transferred into said plurality of data segments (12),wherein each of said plurality of data segments (12) corresponds to a portion of said data set (11);
- storing a copy of each of said plurality of data segment (12) of said data set (11);
- maintaining for said plurality of operating stations (15) said record (13) including references to said plurality of data segment (12) to be transmitted to each of said plurality of operating stations (15),
- sending metainformation contained in said record (13) indicating location of said data segment (12) to said plurality of operating stations (15);
- selecting a first operating station (15) of said plurality of operating stations (15) for transmitting a copy of one or more of said data segment (12) that are referenced in said record (13) for transmission to said first operating station (15); and
- selecting a second operating station (15) of said plurality of operating stations (15) for transmitting a copy of one or more of said data segment (12) that are referenced in said record (13) for transmission to said second operating station (15).

10. The method according to claim 9, wherein said configuration system (10) provides instructions to said first operating station (15) to transfer said missing data segment (12) not referenced in said record (13) from said configuration system (10), if no other said operating station (15) contains said portion of the data set (11).

11. The method according to claim 9, wherein said configuration system (10) provides instructions to said first operating station (15) to transfer said missing data segment (12) not referenced in said record (13) from said second operating station (15) already having said portion of said data set (11) from said configuration system (10).

12. A computer readable medium storing a plurality of instructions causing a computer to perform a method of transferring a data set (11) to a plurality of operating stations (15) from a configuration system (10), said method comprising steps of:
- storing at said configuration system (10) said data set (11) to be transferred as a plurality of data segments (12);
- maintaining at said configuration system (10) a record (13) of said data segment (12) send to each of said plurality of operating stations (15);
- checking based on metainformation contained in said record (13) which, if any, of said data segment (12) have not been received by each of said plurality of operating stations (15);
- identifying for each of said data segment (12) not been received by one of said operating station based on the metainformation contained in said record (13) which, if any, other said operating station has received missing said data segment;
- if any other operating stations (15) has received said missing data segment (12), transferring said missing data segment (12) from said identified operating station (15) to one of said operating station (15)requiring said data segment (12); and
- transferring said missing data segment (12) from the configuration system (10) to one of said operating station (15)requiring said data segment (12), if no other operating station (15) has received said missing data segment (12).

13. The computer readable medium according to claim 12, wherein said metainformation further including identification information on at least one of said configuration system (10) co-coordinating transferring of each of said data segment (12) to said plurality of operating stations (15).

14. The computer readable medium according to claim 13, wherein said metainformation is checked at said configuration system (10) to transfer said data segment (12) to each of said plurality of operating stations (15).

15. The computer readable medium according to claim 14, wherein said metainformation is checked at each of said plurality of operating stations (15) for identifying each of said data segment (12) transmitted from said configuration system (10) to said plurality of operating stations (15).

16. The computer readable medium according to claim 12, wherein said configuration system (10) updates said record (13) of said data segment (12) on transferring said data segment (12) to each of said plurality of operating stations (15).

17. The computer readable medium according to claim 14, wherein said configuration system (10) provides instructions to each of said plurality of operating stations (10) requiring said missing data segment (12) to transfer said missing data segment (12) from said configuration system (10), if no other said operating station (10) contains said data segment (12).

18. The computer readable medium according to claim 14, wherein said configuration system (10) provides instructions to each of said plurality of operating station (15) requiring said missing data segment (12) to transfer said missing data segment (12) from another said operating station (15) already having said data segment (12) from said configuration system (10).

19. The computer readable medium according to claim 12, wherein said configuration system (10) replicate only a single copy of said data segment (12) to at least one of said plurality of operating stations (15).

20. The computer readable medium according to claim 14, wherein transferring said data segment (12) from said configuration system (10) to said plurality of operating stations (15) includes:
- dividing said data set (11) to be transferred into said plurality of data segment (12), wherein each of said plurality of data segments (12) corresponds to a portion of said data set (11);
- storing a copy of each of said plurality of data segment (12) of said data set (11);
- maintaining for said plurality of operating stations (15) said record (13) including references to said plurality of data segment (12) to be transmitted to each of said plurality of operating stations (15),
- sending a metainformation file based on said record (13) indicating location of said data segment (12) to said plurality of operating stations (15);
- selecting a first operating station (15) of said plurality of operating stations (15) for transmitting a copy of one or more of said data segment (12) that are referenced in said record (13) for transmission to said first operating station (15); and
- selecting a second operating station (15) of said plurality of operating stations (15) for transmitting a copy of one or more of said data segment (12) that are referenced in said record (13) for transmission to said second operating station (15).

21. The computer readable medium according to claim 20, wherein said configuration system (10) provides instructions to said first operating station to transfer said missing data segments (12) not referenced in said record (13) from said configuration system (10), if no other said operating station (15) contains said portion of the data set (11).

22. The computer readable medium according to claim 20, wherein said configuration system (10) provides instructions to said first operating station (15) to transfer said missing data segment (12) not referenced in said record (13) from said second operating station (15) already having said portion of said data set (11) from said configuration system (10).
